Europäisches Patentamt

European Patent Office

Office européen des brevets

(19)

(11) Veröffentlichungsnummer: **0 056 081**
**A1**

## (12) EUROPÄISCHE PATENTANMELDUNG

(21) Anmeldenummer: 81108039.9

(22) Anmeldetag: **07.10.81**

(51) Int. Cl.³: **G 06 K 15/10**, G 09 G 1/16

(30) Priorität: **23.12.80 DE 3048629**

(43) Veröffentlichungstag der Anmeldung: **21.07.82**
**Patentblatt 82/29**

(84) Benannte Vertragsstaaten: **CH FR GB IT LI NL SE**

(71) Anmelder: **SIEMENS AKTIENGESELLSCHAFT Berlin und München, Postfach 22 02 61, D-8000 München 22 (DE)**

(72) Erfinder: **Thurz, Bernhard, Dipl.-Ing., Guardinistrasse 40, D-8000 München 70 (DE)**
Erfinder: **Widmaier, Hans-D., Ing. grad., Gräfelfinger Strasse 18, D-8000 München 70 (DE)**

(54) **Verfahren und Anordnung zur Reduzierung des Speicherplatzbedarfes von Zeichen oder grafischen Mustern beschreibenden binären Zeichenfolgen in Zeichengeneratoren.**

(57) Zum Reduzieren des Speicherplatzbedarfs von Zeichenfeldern, die mit einem großen Prozentsatz von Leerspalten versehen sind, bei denen kein Abdruck erfolgt, werden in einem Zeichengenerator nur die Muster derjenigen Spalten abgespeichert, die darzustellende Punkte enthalten. Die Punkte werden durch erste Codewörter (M) dargestellt, und jedem dieser ersten Codewörter (M) sind zweite Codewörter (A) zugeordnet, die die Position der durch die ersten Codewörter (M) darzustellenden Punkte innerhalb des Zeichenfeldes (ZF) kennzeichnen.

Die Erfindung wird zweckmäßigerweise in Zeichengeneratoren von Mosaikdruckeinrichtungen oder Datensichtgeräten verwendet.

SIEMENS AKTIENGESELLSCHAFT     VPA 80 P 6 2 6 1 E
Berlin und München

— 7 —

Verfahren und Anordnung zur Reduzierung des
Speicherplatzbedarfes von Zeichen oder grafischen
Mustern beschreibenden binären Zeichenfolgen in
Zeichengeneratoren.
-------------------------------------------------

Die Erfindung betrifft ein Verfahren zur Reduzierung des
Speicherplatzbedarfes von Zeichen oder grafischen Mustern
beschreibenden binären Zeichenfolgen in Zeichengeneratoren
in Mosaikdruckeinrichtungen, Datensichtgeräten oder dergleichen, bei denen die Zeichen als Punkte eines matrixartig aufgebauten Zeichenfeldes dargestellt werden.

Bei einer punktweisen Darstellung von alphanumerischen
Zeichen und Sonderzeichen mittels eines Mosaikdruckkopfes
oder an einem Bildschirm eines Datensichtgerätes oder
Fernsehgerätes werden die Zeichen durch Matrixpunkte dargestellt. Als Mosaikdruckkopf wird entweder ein Nadeldruckkopf mit einer Mehrzahl von über Tauchspulen angetriebenen Druckernadeln oder ein Tintendruckkopf mit einer
Mehrzahl von piezoelektrisch angetriebenen Düsen verwendet.

Die Anzahl der Druckernadeln oder Düsen ist gleich der
Anzahl der Zeilen der Matrix. Als Ausgabeelement dient
in diesem Fall eine als Druckelement bezeichnete Drucknadel oder Düse. Die Drucknadel oder Düse kann nach einer
Betätigung, frühestens nach einem zeitlichen und räumlichen
Abstand erneut betätigt werden, was als Schritt bzw. als
Druckschritt bezeichnet wird.

MM 1 Wt /22.12.1980

In einer Veröffentlichung von Peukert, B. und Sänger, H. "Schreibstation PT80, Siemens-Zeitschrift 71/1977" Heft 4, Seiten 215 bis 218 ist eine Schreibstation beschrieben, bei der der Mosaikdruckkopf zwischen zwei Betätigungen der Druckelemente nur um einen halben Druckschritt bewegt wird, um die Auflösung der dargestellten Zeichen zu verbessern. Die Anzahl der Druckelemente wird dabei nicht erhöht und die Zeitdauer zwischen zwei Betätigungen desselben Druckelementes wird dabei nicht verkürzt. Eine weitere Verbesserung der Auflösung wird durch die Aufteilung eines Druckschrittes in mehr als zwei Teilschritte erreicht.

Falls jeder möglichen Druckposition innerhalb eines Zeichens ein Binärzeichen zugeordnet wird, ist bei der üblichen Codierung bei einer gleichen Anzahl von Druckelementen eine der Anzahl der Teilschritte pro Druckschritt proportionalen Informationsmenge erforderlich, die in einem Zeichengenerator gespeichert werden. Jedem Druckelement sind in dem Zeichengenerator binäre Zeichenfolgen zugeordnet und die Anzahl der Binärzeichen in jeder Zeichenfolge ist proportional der Anzahl der Teilschritte pro Druckschritt. Bei einer Anwendung von mehreren Teilschritten pro Druckschritt sind somit Zeichengeneratoren mit einer großen Speicherkapazität erforderlich.

Entsprechendes gilt für eine Darstellung von Zeichen oder grafischen Mustern mittels eines Laserdruckers oder auf einem Bildschirm eines Datensichtgerätes oder eines Fernseh-gerätes.

Werden Zeichen im Zeichengenerator derart gespeichert, daß jeder möglichen Druckposition, d.h. jeder Spalte im Zeichenfeld, ein Binärzeichen zugeordnet wird, so enthalten die Mehrzahl der gespeicherten Binärzeichen den Binärwert "0", d.h. in dieser Spalte soll kein Abdruck erfolgen. Dies rührt daher, daß die Zahl der verwendbaren Zeilen durch die Zahl der Schreibdüsen am Schreibkopf beschränkt ist. Eine Vergrößerung des Zeichenfeldes durch Vermehrung der Spaltenzahl verbessert dann zwar das Schriftbild, eine derartige Vergrößerung in der Spaltenzahl ist jedoch nur bis zu einer bestimmten Grenze sinnvoll, ab der sich eine weitere Vergrößerung auf die Qualität des Schriftbildes nicht mehr sichtbar auswirkt.

Der Erfindung liegt die Aufgabe zugrunde, für Zeichengeneratoren in Mosaikdruckei-nrichtungen oder Datensichtgeräten im Verfahren zur Reduzierung des Speicherplatzbedarfes von Zeichen oder grafischen Mustern beschreibenden binären Zeichenfolgen anzugeben, bei dem die Mehrzahl der gespeicherten Binärworte den gleichen Binärwert aufweisen.

Diese Aufgabe wird bei einem Verfahren der eingangs genannten Art dadurch gelöst, daß der einem darzustellenden Zeichen im Zeichengenerator zugeordneten Zeichenfolge eine Folge von ersten Codewörtern den mit abzudruckenden Punkten belegten Spalten des Zeichenfeldes und jedem dieser ersten Codewörter zweite, die Lage der mit abzudruckenden Punkten belegten Spalten im Spaltenfeld kennzeichnende Codewörter zugeordnet werden.

Bei einer vorteilhaften Ausführungsform der Erfindung werden der einem Zeichen zugeordneten Zeichenfolge, Trennzeichen zwischen den einzelnen Zeichenfolgen der Zeichen entsprechende, dritte Codewörter zugeordnet.

Ausgehend von der Tatsache, daß bei großen Zeichenfeldern, die nicht mit Punkten belegten Spalten einen großen Prozentsatz der Gesamtspalten ausmachen, kann der Speicherplatz in vorteilhafter Weise dadurch reduziert werden,

0056081

daß im Zeichengenerator nur die Muster derjenigen Spalten abgespeichert werden, die tatsächlich Druckinformationen enthalten. Vor jeder dieser Druckinformationen steht eine zugehörige Weginformation im Speicher, die angibt, wie weit das Muster vom Rand des Zeichenfeldes bzw. von der vorhergegangenen Druckspalte entfernt ist. Damit wird der Speicherplatzbedarf im Zeichengenerator wesentlich reduziert.

Eine Ausführungsform der Erfindung ist in den Zeichnungen dargestellt und wird im folgenden beispielsweise näher beschrieben.

Es zeigen

Fig. 1 eine schematische Darstellung der Belegung eines Zeichenfeldes beim Darstellen der Ziff."2",

Fig. 2 eine schematische Darstellung der Organisation des Zeichengenerators mit reduziertem Speicherbedarf,

Fig. 3 eine schematische Darstellung des Druckkopfweges einer Tintenmosaikschreibeinrichtung mit zwei Düsenspalten und

Fig. 4 Blockschaltbild der erfindungsgemäßen Anordnung.

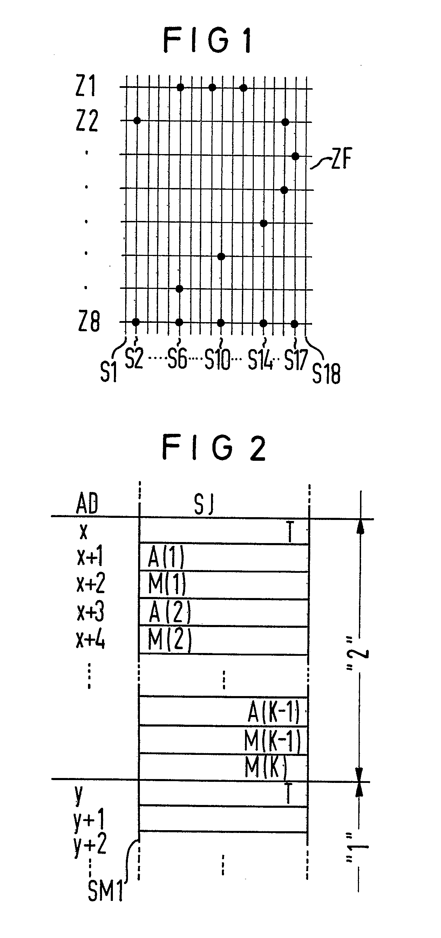

Die Fig.1 zeigt von links nach rechts die Ziff."2" in einem Zeichenfeld von acht Zeilen (Z1 - Z8) und achtzehn Spalten (S1 ... S18), wie sie mittels eines Tintenmosaikkopfes darstellbar ist. Die Ziff."2" wird in einem Raster von Matrixpunkten dargestellt, wobei die Zahl der Zeilen der Matrix durch die Anzahl der als Druckelemente bezeichneten Ausgabeelemente, nämlich die Anzahl der Düsen festgelegt wird, und wobei die Anzahl der Spalten der Matrix durch die Anzahl der als Druckschritte bezeichneten Schritte bestimmt wird. Die Darstellung erfolgt jeweils durch acht Druckelemente.

Bei der Abspeicherung eines derartigen Zeichens in einem Zeichengenerator, z.B. einer Tintenschreibeinrichtung, war es bisher üblich, jeder möglichen Druckposition, nämlich den Spalten S1 bis S18 innerhalb eines Zeichens ein Binärzeichen, in diesem Fall ein Speicherbyte genanntes Codewort, mit acht Bit Länge zuzuordnen. Es wären also in diesem Falle in einem Zeichengenerator 18 Speicherbytes abzuspeichern. Wie aus der Fig.1 ersichtlich, enthält dieses Zeichenfeld bei der Gesamtzahl von 18 Speicherplätzen nur 6 Speicherplätze, nämlich dieSpeicherbytes S2, S6, S10, S14 und S17, denen jeweils Spalten mit abzudruckenden Punkten zugeordnet sind. Nur diese Speicherbytes enthalten deshalb Bits mit einem logischen "Eins"-Wert. Sämtliche anderen Speicherbytes enthalten ausschließlich Bits mit dem logischen Wert "Null".

Der Speicherplatzbedarf zur Abspeicherung des Zeichens "2" im Zeichengenerator reduziert sich nun drastisch, wenn man analog der Fig.2 in dem Zeichengenerator nur diejenigen Spalten abspeichert, die tatsächlich Druckinformationen enthalten.

Der Speicherinhalt SI des eigentlichen Zeichengenerators, hier Speicher für Muster und Abstände SMA genannt, organisiert sich dann gemäß der Erfindung wie folgt:

Unter den Adressen AD wird zunächst unter der Einzeladresse X ein als sogenanntes "Trennzeichen" bezeichnetes Byte abgespeichert. Dieses Trennzeichen T dient dazu, die einzelnen Zeichenblöcke im Zeichengenerator SMA voneinander abzugrenzen. Die Abspeicherung des Trennzeichens T ist für Schriften mit konstantem Zeichenfeldbreiten unnötig, da dann die Summe aller Abstände vom linken bis zum rechten Rand von der Spalte S1 bis zur Spalte S18 eines Zeichenfeldes immer konstant ist. Das Erreichen

0056081

80 P 6 2 6 1 E

dieser Summe kann als Endemerkmal beim Abfragen des Zeichenfeldes herangezogen werden. Die Einführung des Trennzeichens T ist jedoch notwendig, wenn Proportionalschrift gespeichert werden soll. In diesem Fall sind die einzelnen Zeichenfelder verschieden breit. Verwendet man den Zeichengenerator in einer Druckeinrichtung, bei der z.B. rückwärts gedruckt werden kann, ist es von Vorteil, dieses Trennzeichen aus Symmetriegründen zu verwenden.

Unter der Adresse X+1 werden ein den Abstand der ersten belegten Druckspalte, das heißt also der Spalte S2, vom linken Rand des Zeichenfeldes im Vielfachen des Grundrasters (18 Spalten) kennzeichnendes Byte A(1) abgespeichert. Diesem Byte A (1) folgt unter der Adresse X+2 das Byte M (1), das das Muster der ersten belegten Druckspalte, in diesem Falle der Druckspalte S2, kennzeichnet. Diesem Byte M (1) folgt wiederum unter der Adresse X+3 ein Byte A (2), das den Abstand der zweiten belegten Druckspalte, nämlich der Spalte S6, von der ersten belegten Druckspalte (Spalte S2) kennzeichnet. In dem darauffolgenden Byte M (2), das unter der Adresse X+4 abgespeichert ist, ist die Information über das Muster der zweiten belegten Druckspalte, nämlich der Druckspalte S6, enthalten. Diesen Bytes folgen weitere Bytes, die die belegten Druckspalten bis zur Druckspalte S17 kennzeichnen, die in den Bytes bis M (K-1) (K entspricht einem fortlaufenden Zähler) abgespeichert sind. Das letzte Byte des Zeichenblockes bildet das Byte M (K), das den Abstand des rechten Randes, nämlich der Spalte S18, von der letzten belegten Druckspalte, nämlich der Spalte S17, kennzeichnet.

Unter den Adressen Y schließen sich z.B. an das Zeichen "2" die den Zeichen "1" entsprechenden binären Zeichenfolgen im Zeichengenerator SMA an.

0056081

80 P 6261 E

Da nun in diesem Speicher für Muster und Abstände SMA genannter eigentlicher Zeichengenerator jedes Zeichen eine unterschiedliche Anzahl von Speicherbytes je nach der Anzahl der erforderlichen Druckspalten belegt, muß zum Auffinden des Anfanges eines jeden Zeichens im Zeichengenerator eine besondere Tabelle, die sogenannte "Zeigertabelle", angelegt werden. Diese "Zeigertabelle" ist in einem besonderen Adressenspeicher, nämlich dem Speicher SZ, abgespeichert. Dieser Speicher SZ enthält z.B. in einer Folge von Codewörtern die Adressen der verschiedenen im Speicher für Muster und Abstände SMA abgespeicherten Einzelzeichen. Dabei wird jedem Zeichen in dieser Zeigertabelle ein fester Platz zugeordnet. Die Nummer des Tabellenplatzes in der "Zeigertabelle" korrespondiert dabei zweckmäßigerweise mit dem verwendeten Zeichencode, z.B. ISO-7-bit-Code.

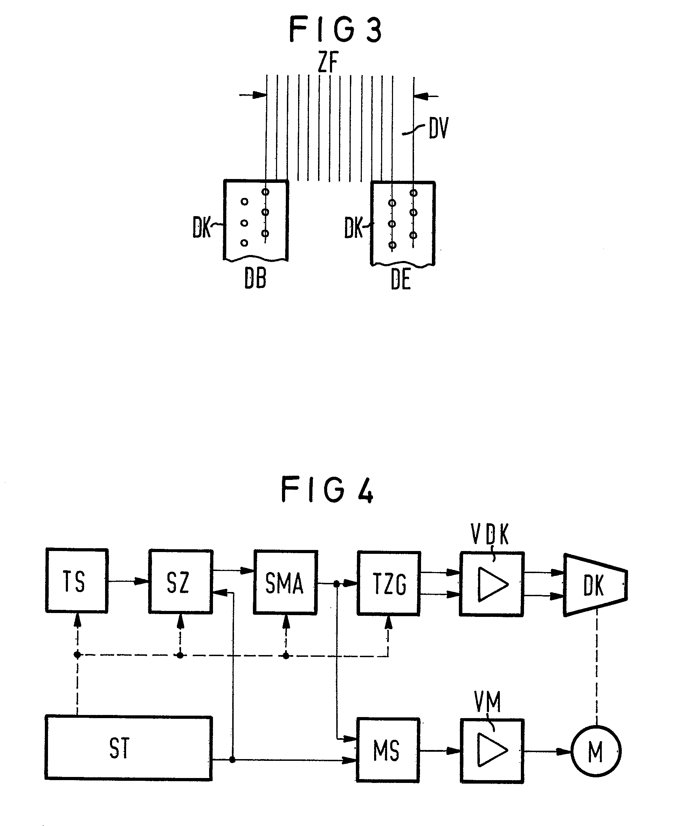

Die in der Fig.4 dargestellte Anordnung zur Durchführung des erfindungsgemäßen Verfahrens bedient sich - wie aus der Fig.3 ersichtlich - eines Druckkopfes DK mit zwei Spalten von Abdruckelementen, nämlich zwei Düsenreihen von z.B. acht Düsen. Wird dabei der Druckkopf DK aus der Position "Druckbeginn" DB bis "Druckende" DE bewegt, so muß dabei berücksichtigt werden, daß jede der beiden Spalten das gesamte Zeichenfeld ZF durchläuft. Dadurch erhöht sich die Anzahl der insgesamt überstrichenen Rasterpositionen um den Düsenversatz DV gegenüber dem Fall, bei dem ein Druckknopf DK mit nur einer Reihe von Druckelementen verwendet wird.

Die gesamte Anordnung besteht im wesentlichen aus einem über einen Motor M zeilenweise entlang von einem hier nicht dargestellten Aufzeichnungsträger bewegten Druckkopf DK. Der Motor wird dabei über einen Leistungsverstärker VM und der Druckkopf über einen Leistungsverstärker VDK angesteuert. Da es sich bei dem Motor M um einen Schrittmotor handelt, ist ihm noch eine allgemein übliche Motorsteuerung MS zugeordnet. Als Speicher
sind der Druckrichtung zugeordnet: der Textspeicher TS,
der Speicher für die Zeigertabelle SZ, der Speicher für
Muster und Abstände SMA und ein sogenannter "temporärer
Zeichengenerator" TZG. Gesteuert wird der Abdruck in
bekannter Weise über eine Steuereinrichtung ST.

Der Abdruck eines im Textspeicher TS abgespeicherten
Textes erfolgt dabei wie folgt: Ausgehend von einem Code
für ein Zeichen "I",der vom Textspeicher TS ausgeht,
wird im Adressenspeicher SZ die Adresse für dieses
Zeichen "I" aufgesucht. Aus der "Zeigertabelle" im
Speicher SZ ergibt sich die Adresse für das Zeichen "I"
bzw. das Zeichen "I+1" bei Rückwärtsdruck, womit aus dem
Speicher für Muster und Abstände SMA das Muster für das
Zeichen "I" ausgelesen werden kann. Diese Information
wird vor dem Abdruck des Zeichens in einen Schreib-Lese-
Speicher, dem sogenannten "temporären Zeichengenerator"
TZG übertragen. Dieser temporäre Zeichengenerator TZG ist
analog dem abzudruckenden Zeichenfeld aufgebaut und enthält für jede Druckspalte einen Speicherplatz. Zum eigentlichen Abdruck wird nun über die Steuereinrichtung ST der
temporäre Zeichengenerator TZG spaltenweise ausgelesen
und sein Inhalt dem Leistungsverstärker VDK zugeführt,
wobei ein zusätzliches Signal zur Auswahl für die linke
oder die rechte Spalte der Druckelemente diesem Leistungsverstärker DK zugeführt werden muß.

5 Patentansprüche
4 Figuren

80 P 8261 E

Bezugszeichenliste

Z1 ... Z8   Zeilen des Zeichenfeldes

ZF          Zeichenfeld

S1 ... S18  Spalten des Zeichenfeldes

S1          Speicherinhalt

SMA         Speicher für Muster und Abstände

AD          Adresse

T           Trennzeichen

X bis X+K   Adressen

A (1) -A (K-1)  Bytes, die die Abstände kennzeichnen

M (1) - M (K)   Bytes, die die Muster kennzeichnen

Y bis Y+K   Adressen

DK          Druckkopf

DB          Druckbeginn

DE          Druckende

DV          Düsenversatz

M           Motor

VM          Leistungsverstärker

VDK         Leistungsverstärker

MS          Motorsteuerung

SZ          Zeigertabelle

TZG         Temporärer Zeichengenerator

ST          Steuerung

TS          Textspeicher

Patentansprüche:

1. Verfahren zur Reduzierung des Speicherplatzbedarfes
von Zeichen oder grafische Muster beschreibenden binären
Zeichenfolgen in Zeichengeneratoren für Mosaikdruckeinrichtungen, Datensichtgeräten oder dergleichen, bei denen
die Zeichen als Punkte eines matrixartig aufgebauten
Zeichenfeldes dargestellt werden,
d a d u r c h  g e k e n n z e i c h n e t, daß der
einem darzustellenden Zeichen im Zeichengenerator (SMA)
zugeordneten Zeichenfolge eine Folge von ersten Codewörtern (M1 bis M (N)) den mit abzudruckenden Punkten
belegten Spalten (S2,S6,S10,S14,S17) des Zeichenfeldes
(ZF) und jedem dieser ersten Codewörter zweite, die Lage
der mit abzudruckenden Punkten belegten Spalten im
Zeichenfeld (ZF) kennzeichnende Codewörter (A1 bis A (N))
zugeordnet werden.

2. Verfahren nach Anspruch 1, dadurch gekennzeichnet,
daß der einem Zeichen zugeordneten Zeichenfolge, Trennzeichen (T) zwischen den einzelnen Zeichenfolgen der
Zeichen entsprechende, dritte Codewörter (T) zugeordnet
werden.

3. Verfahren nach einem der Ansprüche 1 oder 2, dadurch
gekennzeichnet, daß den zweiten Codewörtern eine dem Vielfachen des Grundrasters des Zeichenfeldes (ZF) entsprechende Entfernungsinformation zugeordnet wird.

4. Verfahren nach einem der Ansprüche 1 bis 3, dadurch
gekennzeichnet, daß dem Zeichengenerator (SMA) ein als
Schreib-Lesespeicher dienender temporärer Zeichengenerator (TZG) zugeordnet wird, in den vor dem eigentlichen Druckvorgang das darzustellende Zeichen aus dem
Zeichengenerator derart abgespeichert wird, daß jeder Spalte des temporären Zeichengenerators einen Vorschubschritt des Druckkopfes (DK) entspricht und in der Folge
der abgespeicherten Binärzeichen jedes Binärzeichen mit
einem ersten Binärwert einem abzudruckenden Punkt zugeordnet ist.

5. Anordnung zur Durchführung des Verfahrens nach einem
der Ansprüche 1 bis 4, gekennzeichnet durch einen den
eigentlichen Zeichengenerator beinhaltenden Speicher für
Muster und Abstände (SMA), einem dem Speicher für Muster
und Abstände (SMA) vorgeschalteten, die Adressen der
Einzelzeichen des Zeichengenerators aufnehmenden Adressenspeicher (SZ) und einem dem Speicher (SMA) nachgeschalteten, als Zwischenspeicher dienenden temporären
Zeichengenerator (TZG).

## FIG 1

## FIG 2

2/2

FIG 3

FIG 4

| **EINSCHLÄGIGE DOKUMENTE** | | | KLASSIFIKATION DER ANMELDUNG (Int. Cl.⁴) |
|---|---|---|---|
| Kategorie | Kennzeichnung des Dokuments mit Angabe, soweit erforderlich, der maßgeblichen Teile | betrifft Anspruch | |
| A | <u>DE - B - 2 748 289</u> (SIEMENS A.G.) <br><br> * Figuren 1,2; ab Spalte 5, Zeile 11 bis Spalte 7, Zeile 48 * <br><br> -- | 1 | G 06 K 15/10 <br> G 09 G 1/16 |
| A | <u>DE - A - 2 847 389</u> (HARTMANN & BRAUN) <br><br> * Gesamtes Dokument * <br><br> -- | 1 | **RECHERCHIERTE SACHGEBIETE (Int. Cl.³)** |
| A | IBM TECHNICAL DISCLOSURE BULLETIN, Band 19, Nr. 8, Januar 1977, ARMONK, NEW YORK (US) G.L. DOUGLAS:"Printer Font Compression Technique", Seiten 2851-2852 <br><br> * das ganze Dokument * <br><br> ------- | 1 | G 06 K 15/02 <br> 15/10 <br> G 09 G 1/16 <br> B 41 J 3/02 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 30-03-1982 | Prüfer PESCHEL |
|---|---|---|

EPA form 1503.1 06.78